# FASCICULE DE BREVET EUROPEEN

(11) **EP 0 911 605 B1**
(45) Date de publication et mention de la délivrance du brevet: **01.12.2004**
(21) Numéro de dépôt: 98402617.9
(22) Date de dépôt: 21.10.1998
(51) Int. Cl.: G01C 15/04

(54) **Perfectionnement aux bornes cadastrales en deux parties**
Verbesserung eines zweiteiligen Grenzsteines
Improved two piece boundary marker

(30) Priorité: 22.10.1997 FR 9713211
(43) Date de publication de la demande: 28.04.1999
(73) Titulaire: Thevenin, Patrick D., F-08800 Montherme (FR); Gissinger, Bernard C., F-08800 Montherme (FR); Thevenin, Stéphane J., F-08800 Montherme (FR)
(72) Inventeur: Thevenin, Patrick D., F-08800 Montherme (FR); Gissinger, Bernard C., F-08800 Montherme (FR); Thevenin, Stéphane J., F-08800 Montherme (FR)
(74) Mandataire: Kaspar, Jean-Georges

(56) Documents cités:
- EP-A- 0 272 360
- FR-A- 2 692 609
- US-A- 4 185 425

## Description

L'invention concerne les bornes cadastrales en deux parties comportant une tête de borne munie d'un perçage central à travers lequel on enfonce un piquet cylindrique dont l'extrémité supérieure de diamètre élargi forme le verrou supérieur de l'ensemble.

Dans le brevet français n° 73.33219 est décrit une borne combinée avec un piquet à tiges déployables qui procure un ancrage extrêmement puissant de la borne et un mode de pose éliminant le risque de détérioration de la tête.

Dans le brevet européen 272.360 est décrit un dispositif destiné à éviter que la tête coulisse le long du tube et dégage le haut du piquet, par exemple par suite d'un tassement du terrain sous la tête de borne après la pose de cette dernière.

On a cependant constaté que, même munie de ce dispositif, la borne présentait encore certains inconvénients dont le principal est que l'immobilisation de la tête en rotation autour du piquet n'est assurée que par l'appui de l'extrémité supérieure du tube sur la tête de borne, et que dès lors, la sécurité de l'orientation cardinale de la tête n'est pas assurée. En effet, après la pose, la tête est soumise à de nombreux chocs au cours de son utilisation, notamment celui des roues d'engins lourds tels que les tracteurs ou autres véhicules analogues. La répétition de ces chocs engendre une rotation de la tête autour du piquet, ce qui fait que les marques cardinales gravées sur le dessus de la tête voient leur orientation modifiée, la tête n'assurant par conséquent plus sa fonction de repère cardinal fixe.

Cette rotation de la tête est amplifiée lorsque sous l'effet d'un tassement de terrain, la base de la tête n'est plus en appui sur le sol, même si la tête est équipée du diaphragme de solidarisation prévu par le brevet européen 272.360 précité.

Dans les cas extrêmes on a même constaté que le roulement d'un engin lourd sur la tête de borne équipée dudit diaphragme de solidarisation peut aller jusqu'à provoquer un rebroussement des secteurs du diaphragme qui dès lors perdent leur capacité de maintien de la tête le long du piquet d'ancrage.

L'invention vise à remédier à ces inconvénients par des moyens simples et peu coûteux, sans apporter de modification substantielle au processus de pose décrit dans le brevet français n° 73.33219 qui évite la détérioration de la tête lors de la pose.

Selon invention, la partie supérieure du tube de l'amarre est associée à un manchon déformable d'une longueur sensiblement égale à la distance séparant la base de la tête de borne et l'épaulement de ladite tête servant d'appui à la collerette supérieure du tube d'ancrage, l'épaisseur du manchon étant légèrement supérieure au jeu existant entre le diamètre externe du tube et le diamètre interne du perçage central de la tête de borne.

Par ces moyens, lors de la phase finale du processus de pose, l'écrasement du manchon entre le tube et le perçage au cours de l'enfoncement du tube sous l'effet de la traction exercée par le déploiement des tiges d'ancrage provoqué par le mandrinage, procure un frein très efficace contre toute rotation de la tête autour du tube.

Dans une forme de réalisation particulièrement avantageuse, lorsque la longueur du manchon est telle qu'en position de service le manchon fait légèrement saillie à la base du perçage de la tête de borne, cette saillie fait fonction de butée contre tout rebroussement éventuel des secteurs du diaphragme de solidarisation.

Le manchon selon l'invention peut être fixé sur le tube à l'endroit approprié au cours du processus de fabrication de ce dernier ou bien être fourni comme pièce séparée à mettre en place autour du tube au cours du processus de pose de la borne.

L'invention sera mieux comprise à l'aide de la description ci-après d'un mode de réalisation, préférentiel mais non limitatif, d'une borne cadastrale munie d'un manchon selon l'invention, en référence aux dessins annexés sur lesquels :
La Figure 1 est une vue schématique en coupe verticale médiane d'une borne cadastrale, telle que décrite dans le brevet français n° 73.33219, en cours de pose, la pointe du piquet amarre étant omise ainsi que les tiges d'ancrage,
La Figure 2 est une vue analogue à la figure 1 d'une borne cadastrale munie d'un diaphragme de solidarisation du type décrit dans le brevet EP 272.360,
La Figure 3 est une vue schématique en coupe verticale médiane d'une borne cadastrale selon l'invention en cours de pose avant que le manchon ne soit engagé dans le perçage central de la tête de borne,
La Figure 4 est une vue analogue à la figure 3 en fin de pose,
Les Figures 5a à 5d sont des vues schématiques en élévation de variantes de réalisation du manchon selon l'invention.

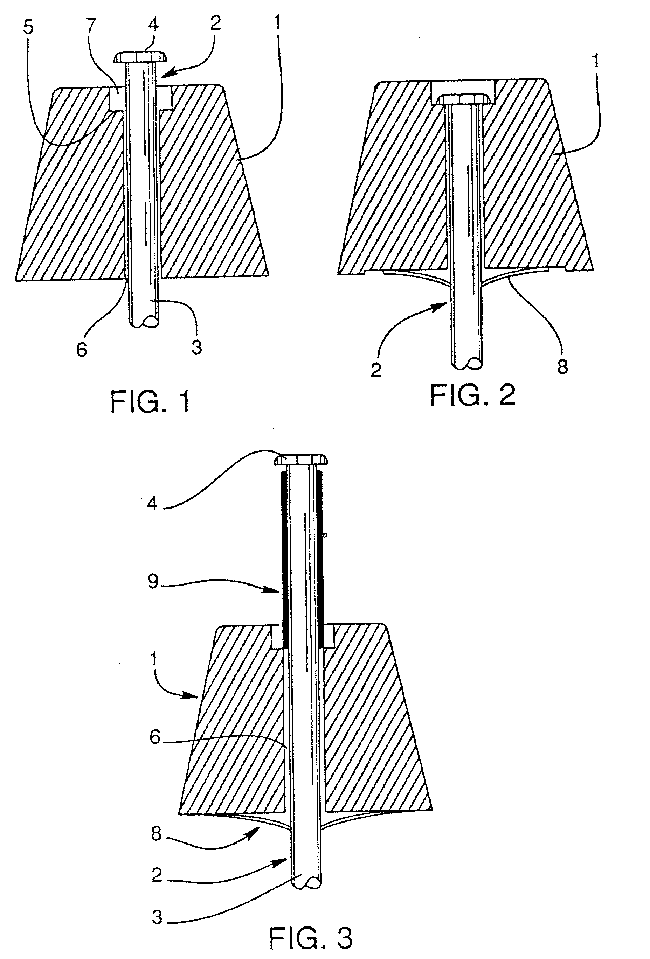

On voit sur la Figure 1 qu'une borne cadastrale en deux parties est constituée d'une tête de borne 1 et d'un piquet amarre 2 constitué d'un tube creux 3 logeant des tiges déformables (non représentées), lesdites tiges débouchant à la pointe basse (non représentée) du tube 3. L'extrémité opposée du tube 3 est équipée d'une collerette ou rondelle 4 destinée à venir en appui sur l'épaulement 5 adjacent au perçage central 6 de la tête 1, ledit épaulement 5 étant formé par un évidement central 7 de ladite tête 1.

Comme exposé dans le brevet français 73.33219, la pose s'effectue comme suit
- on place la tête 1 sur le sol à l'endroit voulu,
- on engage le piquet amarre 2 dans le perçage central 6 et l'on martèle la tête du tube pour l'enfoncer jusqu'à proximité de la tête de borne 1,
- on engage dans le trou du tube un outil de mandrinage que l'on frappe pour déployer dans le sol les tiges portées par le tube.

La traction exercée par les tiges sur le tube au cours de ce déploiement assure la fin de l'enfoncement du piquet 2 jusqu'à ce que la collerette 4 vienne en butée contre l'épaulement 5 de la tête 1 sans risque qu'un coup de marteau vienne endommager la tête 1.

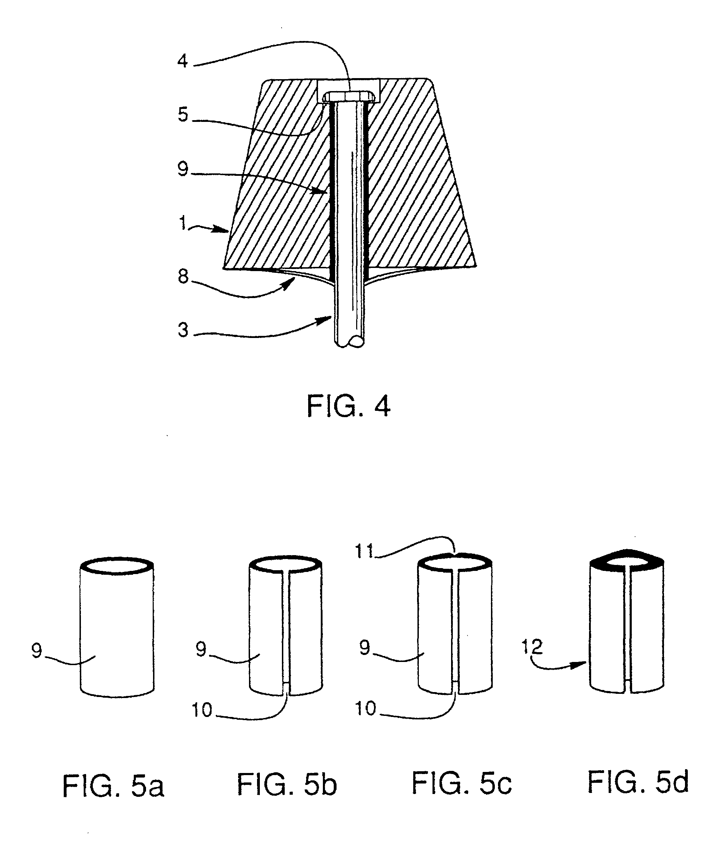

On voit sur la figure 2 le diaphragme de solidarisation 8 prévu par le brevet EP 272.360 qui empêche que la tête 1 ne redescende le long du tube 2 lorsqu'il se produit un tassement ou une érosion du terrain sur la base de la borne.

Sur la Figure 3, on voit en coupe un ensemble comportant une tête de borne 1, un piquet 2, un diaphragme 8 en cours d'enfoncement du piquet 2 dans le sol, la collerette supérieure du piquet étant écartée du dessus de la tête de borne. La partie dépassante supérieure du tube 3 du piquet 2 est entourée par un manchon 9.

Ce manchon est en matériau déformable, par exemple du chlorure de polyvinyle, du polypropylène, de l'acier à ressort ou tout autre matériau équivalent.

Il est destiné à venir s'insérer à force dans l'espace annulaire libre existant entre le diamètre interne du perçage 6 et le diamètre externe du tube 3.

En application de la loi de Coulomb, le diamètre du manchon sera légèrement supérieur à celui du perçage de la tête de borne de manière à pouvoir engendrer des déformations suffisantes pour le serrage des pièces mais limitées pour ne pas provoquer l'éclatement de la tête de borne ou l'affaiblissement du tube du piquet.

Selon l'exemple préférentiel de réalisation représenté particulièrement sur la figure 4, on voit que la longueur du manchon est sensiblement égale à la distance séparant l'épaulement 5 de la tête 1 du point d'application des secteurs du diaphragme 8 autour du tube 3 du piquet 2. Ainsi, l'extrémité du manchon 9 faisant saillie à la base de la tête 1 fait fonction de butée anti-rebroussement pour le diaphragme 8.

Le manchon 9 peut avoir été enfilé sur le tube 2 au cours de la fabrication du piquet, il peut être maintenu en position haute sur le tube 2, en appui contre la collerette 4 par tout moyen approprié (collage, agrafage, vissage, etc...)

Cependant, selon une forme de réalisation préférée, représenté sur la figure 5b, le manchon sera réalisé comme une pièce indépendante enclipsable sur le tube 2 au cours du processus de pose. A cet effet, le manchon 9 sera constitué d'une portion de tube en matériau déformable préservant une fente 10 sur toute la longueur d'une de ses génératrices. Cette disposition permet de placer le manchon autour du tube, au moment voulu au cours du processus de pose par simple clipsage et de réaliser des manchons particulièrement peu onéreux par extrusion de polypropylène ou matières plastiques analogues.

Sur la figure 5c est représenté un manchon 9 analogue à celui de la figure 5b, mais qui comporte en outre, à l'opposé de la fente 10, une rainure 11 constituant une charnière facilitant l'ouverture du manchon au moment du clipsage.

Le manchon 12 représenté à la figure 5d est un exemple de réalisation du manchon dans une forme autre que cylindrique pour s'adapter à la forme du perçage 6 de la tête de borne, en l'espèce une forme trilobée.

## Revendications

1. Borne cadastrale en deux parties, du type comportant une tête (1) présentant un perçage central (6) avec en partie supérieure un épaulement (5), et un piquet (2) amarre équipé à son extrémité supérieure d'une collerette (4) d'appui sur l'épaulement (5) de ladite tête (1), **caractérisée en ce que** la partie supérieure du tube (3) de l'amarre (2) est associée à un manchon (9, 12) déformable d'une longueur sensiblement égale à la distance séparant la base de la tête (1) de borne et l'épaulement (5) de ladite tête (1) servant d'appui à la collerette supérieure (4) du tube (3) d'ancrage, l'épaisseur du manchon (9, 12) étant légèrement supérieure au jeu existant entre le diamètre externe du tube (3) et le diamètre interne du perçage (6) central de la tête (1) de borne.

2. Borne selon la revendication 1, **caractérisée en ce que** le manchon (9, 12) est en matériau déformable, de manière que l'écrasement du manchon (9, 12) entre le tube (3) et le perçage (6) au cours de l'enfoncement du tube (3) sous l'effet de la traction exercée par le déploiement des tiges d'ancrage procure un frein contre toute rotation de la tête (1) autour du tube (3).

3. Borne selon la revendication 1 ou 2, munie à sa base d'un diaphragme (8) de solidarisation du piquet (2), **caractérisée en ce que** le manchon (9, 12) est d'une longueur telle qu'il fait saillie sous la tête (1) pour former une butée anti-rebroussement pour le diaphragme (8).

4. Manchon (9, 12) pour borne cadastrale selon la revendication 1 ou 2, **caractérisé en ce qu'**il comporte une fente (10) sur toute la longueur d'une de ses génératrices.

5. Manchon (9, 12) selon la revendication 4, **caractérisé en ce qu'**il comporte une rainure (11) diamétralement opposée à la fente (10).

6. Manchon (9, 12) selon l'une des revendications 4 ou 5, **caractérisé en ce qu'**il présente en section une forme correspondant à un contour de perçage (6) de la tête de borne (1).

## Claims

1. A boundary marker in two parts, of the type comprising a head (1) having a central bore (6) with a shoulder (5) in the upper part, and an anchoring peg (2) equipped at its upper end with a collar (4) for bearing against the shoulder (5) of said head, **characterised in that** the upper end of the tube (3) of the peg (2) is associated with a deformable sleeve (9, 12) of a length substantially equal to the distance separating the base of the head (1) and the shoulder (5), the thickness of the said sleeve (9, 12) being slightly greater than the play between the external diameter of the tube (3) and the internal diameter of the central bore (6) of the head (1) of the marker.

2. A marker according to claim 1, **characterised in that** the sleeve (9, 12) is in a deformable material, so that the squeezing of the sleeve (9, 12) between the tube (3) and the bore (6), during penetration of the tube (3) under the effect of the traction exerted by the anchoring rods, provides a brake against any rotation of the head (1) about the tube (3).

3. A marker according to Claim 1 or 2, equipped at its base with a diaphragm (8) for joining it in integral manner to the peg (2) **characterised in that** the sleeve (9, 12) is of a length such that it projects below the head (1) to form a non-return stop for the diaphragm (8).

4. A sleeve (9, 12) for a boundary marker according to Claim 1 or 2, **characterised in that** it comprises a slot (10) over the entire length of one of its generating lines.

5. A sleeve (9, 12) according to claim 4, **characterised in that** it comprises a groove (11) diametrically opposite the slot (10).

6. A sleeve (9, 12) according to one of Claims 4 or 5, **characterised in that** it has in section a shape corresponding to a contour of the bore (6) of the marker head (1).

## Patentansprüche

1. Zweiteiliger Grenzstein der Art mit einem Kopf (1), der eine Mittelbohrung (6) und in seinem oberen Teil eine Schulter (5) aufweist, und mit einem Haltepfahl (2), der an seinem oberen Ende mit einem Kragen (4) zur Auflage auf der Schulter des Kopfes versehen ist, **dadurch gekennzeichnet, daß** das Rohr (3) des Pfahls (2) in seinem oberen Teil mit einer verformbaren Manschette (9, 12) mitwirkt, die einer Länge, die im wesentlichen gleich dem Abstand zwischen dem unteren Teil des Kopfes (1) und der Schulter (5) ist, hat wobei die Dicke der Manschette geringfügig größer als das zwischen dem Außendurchmesser des Rohrs (3) und dem Innendurchmesser der Mittelbohrung (6) des Grenzsteinkopfes vorhandene Spiel ist.

2. Grenzstein nach Anspruch 1, **dadurch gekennzeichnet, daß** die Manschette (9, 12) in einem verformbaren Stoff ist, so daß die Verformung der Manschette (9, 12) zwischen dem Rohr (3) und der Bohrung (6) im Laufe der Durchziehung des Rohrs (3) unter der Auswirkung der durch die Entfaltung der Verankerungsdrahten exerzierten Traktion eine Bremse gegen jegliche Rotation des Kopfes (1) um das Rohr (3) verschafft.

3. Grenzstein nach Anspruch 1 oder 2, der an seinem unteren Teil mit einer Membran (8) zur Befestigung des Pfahis (2) versehen ist, **dadurch gekennzeichnet, daß** die Manschette (9, 12) eine solche Länge aufweist, daß sie unter dem Kopf (1) vorsteht, um für die Membran (8) einen Anschlag gegen einen Rücklauf zu bilden.

4. Manschette (9, 12) für einen Grenzstein nach Anspruch 1 oder 2, **dadurch gekennzeichnet, daß** sie über die gesamte Länge einer ihrer Mantellinien mit einem Schlitz (10) versehen ist.

5. Manschette (9, 12) nach Anspruch 4, **dadurch gekennzeichnet, daß** sie eine Nut (11) umfaßt, die dem Schlitz (10) diametral gegenüberliegt.

6. Manschette (9, 12) nach einem der Ansprüche 4 oder 5, **dadurch gekennzeichnet, daß** sie im Schnitt eine Form aufweist, die einer Kontur der Bohrung (6) des Grenzsteinkopfes (1) entspricht.
